**Europäisches Patentamt**

**European Patent Office**

**Office européen des brevets**

(19)

(11) Veröffentlichungsnummer : **0 392 448 B1**

## (12) EUROPÄISCHE PATENTSCHRIFT

(45) Veröffentlichungstag der Patentschrift :
**19.08.92 Patentblatt 92/34**

(21) Anmeldenummer : **90106828.8**

(22) Anmeldetag : **10.04.90**

(51) Int. Cl.⁵ : **G01C 17/38,** G01C 21/22

(54) Verfahren zur Ermittlung eines Winkelfehlers bei einem Magnetfeldsensor.

(30) Priorität : **13.04.89 EP 89106652**

(43) Veröffentlichungstag der Anmeldung :
**17.10.90 Patentblatt 90/42**

(45) Bekanntmachung des Hinweises auf die
Patenterteilung :
**19.08.92 Patentblatt 92/34**

(84) Benannte Vertragsstaaten :
**AT BE CH DE DK ES FR GB IT LI NL SE**

(56) Entgegenhaltungen :
**EP-A- 0 166 547**
**EP-A- 0 268 278**
**DE-A- 3 434 896**

(56) Entgegenhaltungen :
**PATENT ABSTRACTS OF JAPAN, Band 12, Nr.**
**170 (P-705)[3017], 20. Mai 1988, Seite 133 P**
**705; & JP-A-62 282 223 (NEC HOMEELECTRO-**
**NICS LTD) 08-12-1987**
**PATENT ABSTRACTS OF JAPAN, Band 10, Nr.**
**247 (P-490)[2303], 26. August 1986, Seite 101 P**
**490; & JP-A-61 076 909 (NISSANMOTOR CO.,**
**LTD) 19-04-1986**

(73) Patentinhaber : **SIEMENS**
**AKTIENGESELLSCHAFT**
**Wittelsbacherplatz 2**
**W-8000 München 2 (DE)**

(72) Erfinder : **Oberstein, Karla**
**St.-Cajetan-Strasse 32**
**W-8000 München 80 (DE)**

**Beschreibung**

Die Erfindung betrifft ein Verfahren zur Ermittlung eines Winkelfehlers bei einem in einem Fahrzeug eingebauten Magnetfeldsensor, wobei das Fahrzeug Teil eines Navigationssystems ist, in welchem geografische Ortsdaten im Fahrzeug zur Verfügung stehen.

Der Magnetfeldsensor ist als magnetischer Kompaß seit langem bekannt und für Navigationsverfahren, insbesondere für die Koppelnavigation, in Gebrauch. Dabei beruht die Richtungsbestimmung der Sonde bzw. eines mit der Sonde versehenen Fahrzeugs auf einer Messung des Erdmagnetfeldes und der entsprechenden Bestimmung des Winkels zwischen der Nordrichtung des Erdmagnetfeldes und der Sondenachse bzw. der Längsachse des Fahrzeuges. Ein mögliches Auswerteverfahren für eine solche Magnetfeldsonde ist beispielsweise in der EP-A-0 065 762 beschrieben.

Störmagnetfelder vom Fahrzeug selbst oder von externen Störquellen können das Meßergebnis einer Magnetfeldsonde verfälschen. Zur Beseitigung dieser Störeinflüsse sind verschiedene Korrekturverfahren entwickelt worden. Beispielsweise ist in der EP-A-0 067 338 ein solches Korrekturverfahren beschrieben, womit ein magnetischer Störvektor ermittelt und zur Korrektur des Meßergebnisses verwendet werden kann.

Eine zusätzliche Fehlerquelle, die mit einem Korrekturvektor nicht kompensiert werden kann, ergibt sich durch einen fehlerhaften Einbau der Sonde im Fahrzeug. Wie oben dargelegt, mißt die Sonde jeweils die Richtung ihrer Längsachse gegenüber der Nordrichtung des Erdmagnetfeldes und damit auch die Richtung der Fahrzeuglängsachse, wenn diese beiden Längsachsen übereinstimmen. Das bedeutet, daß die Sonde beim Einbau genau in der Fahrzeuglängsachse ausgerichtet werden muß, damit die gemessene Richtung auch tatsächlich die Fahrtrichtung des Fahrzeuges ist. Wird jedoch die Sonde versehentlich verdreht eingebaut, so stimmt die gemessene Richtung nicht mit der Fahrtrichtung des Fahrzeuges genau überein. Dieser Drehfehler ergibt zusammen mit dem Störvektor je nach Winkellage einen unterschiedlich großen Meßfehler, der mit dem Störvektor allein nicht zu kompensieren ist.

Es ist somit Aufgabe der vorliegenden Erfindung, ein Verfahren anzugeben, um einen Einbau-Drehfehler der Magnetfeldsonde in einem Fahrzeug festzustellen und für eine Korrektur der Meßwerte bereitzustellen.

Erfindungsgemäß wird diese Aufgabe bei einem in einem Fahrzeug eingebauten Magnetfeldsensor, wobei das Fahrzeug Teil eines Navigationssystems ist, in welchem geografische Ortsdaten im Fahrzeug zur Verfügung stehen, mit folgenden Merkmalen gelöst:

– Im Fahrzeug wird mit dem Magnetfeldsensor in vorgegebenen Abständen der Winkel der Sonden-Längsachse als Istwinkel gegenüber dem Erdmagnetfeld ermittelt;

– nach Zurücklegung einer Strecke mit bekannten Ortsdaten wird der Differenzwert zwischen dem für diese Strecke gemessenen Istwinkel und dem aus den bekannten Ortsdaten ermittelten Sollwinkel gebildet und in einem Sektorspeicher abgelegt, wobei der gesamte Winkelbereich von 360° in mehrere Sektoren mit jeweils einem zugeordnenen Sektorspeicher eingeteilt ist und wobei die Differenzwerte jeweils in dem dem betreffenden Sollwinkel zugehörigen Sektorspeicher abgelegt werden; und

– nach Speicherung einer vorgegebenen Mindestanzahl von Differenzwerten in allen Sektorspeichern werden die Mittelwerte der Speicherinhalte miteinander verglichen, und bei signifikanter Übereinstimmung der Mittelwerte wird aus ihnen ein Wert für den Drehfehler abgeleitet.

Das Erfindungsprinzip beruht also darauf, daß die gemessenen Winkelwerte für bestimmte Strecken mit den vorbekannten tatsächlichen Winkelwerten dieser Strecken verglichen werden. Während ein Störvektor sich je nach der Himmelsrichtung durch vektorielle Addition mit dem Vektor des Erdmagnetfeldes in unterschiedlicher Weise auswirkt, muß ein Drehfehler der Sonde selbst in allen Himmelsrichtungen den gleichen Winkelfehler ergeben. Speichert man also die (nach Korrektur der magnetischen Störfehler) erhaltenen Winkeldifferenzen je nach Fahrtrichtung in zugehörige Sektorspeicher, also beispielsweise für jeden Kreisquadranten in einen eigenen Speicher, so muß sich eine signifikante Übereinstimmung in allen Speichern ergeben, wenn der Fehler auf einer verdrehten Einbaulage des Sensors beruht.

In einer praktischen Ausführungsform des erfindungsgemäßen Verfahrens ist vorgesehen, daß aus den Mittelwerten aller Sektorspeicher ein Gesamt-Mittelwert gebildet und die Streuung der Sektor-Mittelwerte gegenüber dem Gesamt-Mittelwert berechnet wird. Dieser Gesamt-Mittelwert wird für die Bestimmung des Drehfehlers dann um so stärker gewichtet, je geringer die Streuung ist. Das bedeutet, daß der Gesamt-Mittelwert unmittelbar als der zu korrigierende Drehfehler anzusehen ist, wenn die Streuung gegen 0 geht, und daß dieser Gesamt-Mittelwert um so weniger als der gesuchte Drehfehler anzusehen ist, je stärker die Streuung zwischen den verschiedenen Sektor-Mittelwerten in Erscheinung tritt. Ist jedoch im Idealfall der Magnetfeldsensor genau in Richtung der Fahrzeuglängsachse eingebaut, so wird der Istwert in jedem Sektor mit dem Sollwert übereinstimmen, also ein Drehfehler von 0 ermittelt.

Bei einer zweckmäßigen Auswertung wird der Drehfehler aus dem Gesamt-Mittelwert $\overline{M}$ und der Streuung $\sigma$ nach der folgenden Beziehung ermittelt:

$$D = \frac{\overline{M} \times a}{a + \sigma^b}$$

Die Konstanten a und b können zweckmäßig gewählt werden. Gute Ergebnisse wurden beispielsweise mit einem Wert von a = 10 und einem Wert von b = 2 gefunden. In diesem Fall ist also der Drehfehler, der zu korrigieren ist,

$$DF = \frac{\overline{M} \cdot 10}{10 \cdot \sigma^2}$$

Das erfindungsgemäße Verfahren wird nachfolgend an einem Ausführungsbeispiel anhand der Zeichnung näher erläutert. Es zeigen

FIG 1 eine schematische Darstellung einer in einem Fahrzeug mit einem Drehfehler eingebauten Sonde,

FIG 2 einen Ausschnitt aus einem Stadtplan mit einer durch einzelne Geraden-Stücke gebildeten Fahrtroute,

FIG 3 eine schematische Darstellung der Speicherinhalte von vier Quadrantenspeichern mit Mittelwertbildung und

FIG 4 ein Flußdiagramm für die erfindungsgemäße Ermittlung eines Drehfehlers.

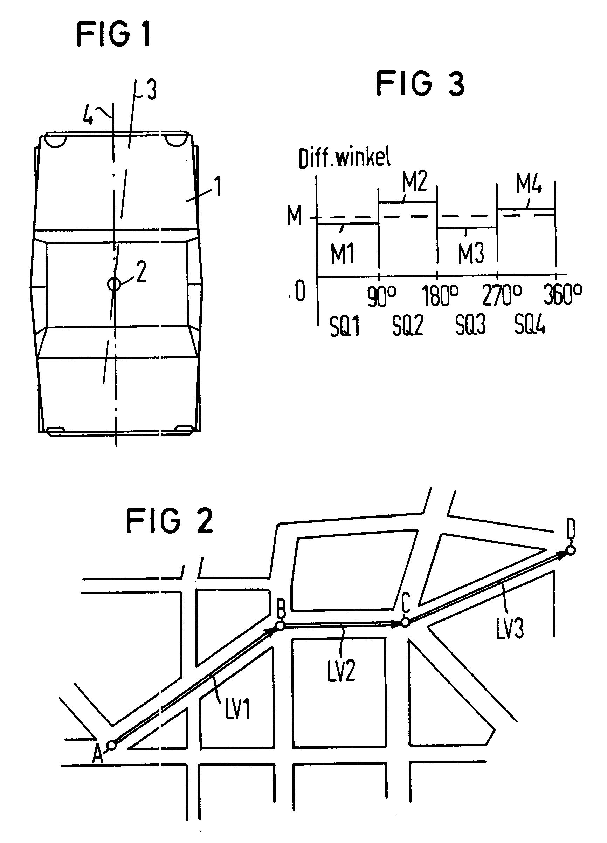

FIG 1 zeigt die eingangs erwähnte Ausgangslage für das erfindungsgemäße Verfahren. Es geht dabei um einen in einem Fahrzeug 1 eingebauten Magnetfeldsensor 2. Durch einen Drehfehler beim Einbau ist die Sondenlängsachse 3 gegenüber der Fahrzeuglängsachse 4 um einen Winkel $\Delta\phi$ verdreht. Dieser Winkel geht als Fehler in die Winkelmessung mit dem Magnetfeldsensor ein und soll korrigiert werden.

FIG 2 zeigt einen Ausschnitt aus einem fiktiven Stadtplan, wobei ein Fahrzeug durch Leitweglenkung eine Strecke von A nach D zurücklegen soll. Diese Strecke ist in einzelne gerade Stücke entsprechend dem Straßenverlauf aufgeteilt; diese geraden Stükke können als sogenannte Leitvektoren dem Fahrzeugführer durch Informationsübertragung von außen vorgegeben werden. Ein solches System mit Leitvektoren ist beispielsweise in der EP-A-0 021 060 beschrieben. Das Fahrzeug fährt dabei beispielsweise den vorgegebenen Weg entlang den einzelnen Leitvektoren LV1 von A nach B, dann entlang dem Leitvektor LV2 von B nach C und entlang dem Leitvektor LV3 von C nach D. Im Fahrzeug selbst wird durch Koppelnavigation mit Hilfe der Magnetfeldsonde und eines Wegmessers der Verlauf der gefahrenen Route kontrolliert. Ist beispielsweise der Leitvektor LV1 durch Fahren der entsprechenden Strecke unter dem vorgegebenen Winkel abgearbeitet, so wird durch das System die Richtungsänderung am Punkt B angezeigt, so daß also der Fahrzeugführer mit der neuen Fahrtrichtung des Leitvektors LV2 die nächste Strecke ansteuert.

Der jeweils zurückgelegte Leitvektor kann nach Weg und Richtung mit den tatsächlichen geografischen Daten verglichen werden. Hierzu gibt es verschiedene Möglichkeiten. Beispielsweise können die Koordinaten der Eckpunkte A, B, C und D im Fahrzeug gespeichert oder von einzelnen Baken, beispielsweise am Punkt A, in das Fahrzeug übertragen werden. Am Punkt B kann also im Fahrzeug die mit dem Magnetfeldsensor gemessene Richtung mit der tatsächlichen Fahrtrichtung, die durch die Koordinaten der Punkte A und B festgelegt ist, verglichen und zur Ermittlung eines Winkelfehlers ausgewertet werden. Eine andere Möglichkeit ist beispielsweise die Speicherung des Straßenverlaufs, wobei also die gemessene Fahrtrichtung mit der gespeicherten Richtung einer betreffenden Straße verglichen wird.

FIG 3 zeigt die schematische Darstellung von vier Quadrantenspeichern, in denen die ermittelten Winkelfehler je nach der zugehörigen Soll-Fahrtrichtung abgespeichert werden. Im vorliegenden Beispiel ist also der Vollkreis in vier Quadranten eingeteilt, und jedem Quadranten ist einer der Quadrantenspeicher SQ1 bis SQ4 zugeordnet. Die ermittelten Winkeldifferenzwerte werden also in den Quadrantenspeicher SQ1 eingegeben, wenn die zugehörige Sollrichtung im Winkelbereich von 0° bis 90° liegt, entsprechend werden die Differenzwerte in den Quadrantenspeicher SQ2 gegeben, wenn die Sollrichtung zwischen 90° und 180° liegt; für die Quadrantenspeicher SQ3 und SQ4 gilt entsprechendes für die Winkelbereiche zwischen 180° und 270° bzw. zwischen 270° und 360°. Jedem Quadrantenspeicher SQ1 bis SQ4 ist außerdem ein Zählspeicher oder Zähler Z1 bis Z4 zugeordnet, der die Anzahl der gespeicherten Differenzwerte mitzählt, da erst bei einer genügend großen Zahl von Meßwerten in jedem Quadranten eine zuverlässige Ermittlung des Drehfehlers möglich ist. Es sei angemerkt, daß die einzelnen Quadrantenspeicher die einzelnen Differenzwerte nicht getrennt speichern, sondern jeweils einen Mittelwert aus allen eingegebenen Differenzwinkelwerten bilden, so daß in jedem Quadrantenspeicher SQ immer nur ein aktualisierter Mittelwert für den betreffenden Quadranten enthalten ist.

Wie in FIG 3 weiterhin angedeutet ist, wird aus den einzelnen Mittelwerten $\overline{M1}$ bis $\overline{M4}$ in den Quadrantenspeichern SQ1 bis SQ4 ein Gesamt-Mittelwert $\overline{M}$ gebildet. Dieser Gesamt-Mittelwert $\overline{M}$ kann in Abhängigkeit von der Streuung zwischen den einzelnen Mittelwerten als Drehfehler und damit als Korrekturwert verwendet werden, wobei jedoch die Streuung zwischen den einzelnen Quadranten berücksichtigt werden muß. Liegt keine Streuung vor, d. h. daß alle Quadranten den gleichen Mittelwert aufweisen, dann kann der Gesamt-Mittelwert $\overline{M}$ unmittelbar als Drehfehler angenommen und zur Korrektur der Richtungsmessung verwendet werden. Je größer jedoch die Streuung ist, um so weniger wird der Mittelwert $\overline{M}$ für die Bemessung des Drehfehlers gewichtet. Die Streuung ermittelt sich aus der jeweiligen Abweichung zwischen den verschiedenen Quadranten-Mittelwerten $\overline{M1}$ bis $\overline{M4}$ vom Gesamt-Mittelwert $\overline{M}$. Für die Berechnung kann der Streuwert zweckmäßigerweise so definiert werden:

$$\sigma^2 = \frac{1}{4} \sum_{i=1}^{i=4} (\overline{M} - SPEICHER\ SQ\ (i))^2$$

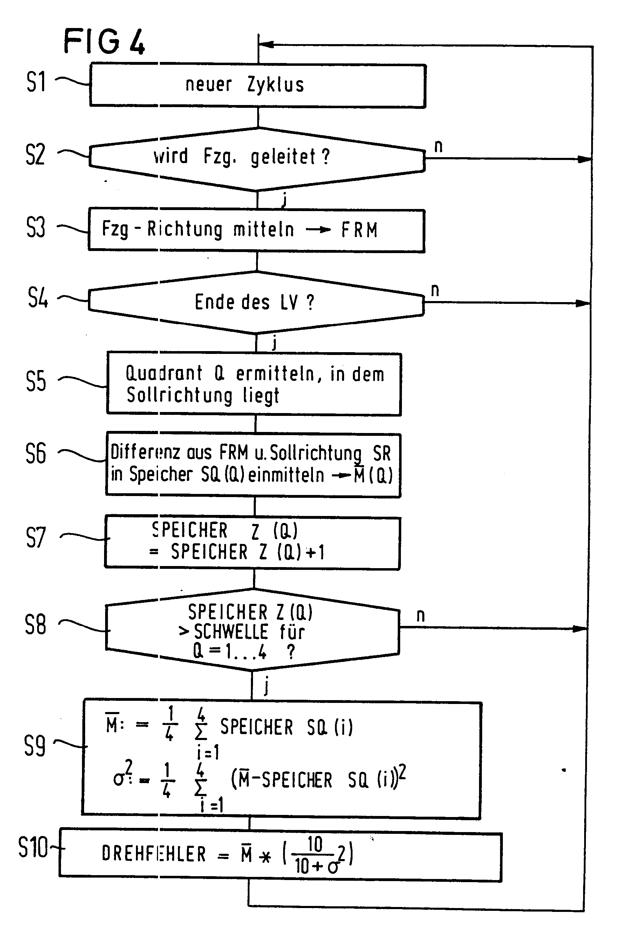

In FIG 4 ist ein Flußdiagramm für die beschriebene Ermittlung des Drehfehlers gezeigt, wie es bei einem System mit Leitvektoren etwa gemäß EP-A-0 021 060 zur Anwendung kommt. Dabei wird im Schritt S1 jeweils ein neuer Abfragezyklus gestartet, und im Schritt S2 wird jeweils festgestellt, ob das Fahrzeug geleitet wird, d. h., ob eine Stützung der Koppelnavigation durch genau festgelegte geografische Daten, beispielsweise in Form von Leitvektoren, stattfindet. Ist dies der Fall, dann wird im Schritt S3 bei jeder Ermittlung der Fahrzeugrichtung der gespeicherte Mittelwert der Richtung aktualisiert. Ist das Ende des Leitvektors LV bzw. das Ende der bekannten Vergleichsstrecke erreicht (S4), dann wird im Schritt S5 derjenige Quadrant ermittelt, in welchem die Sollrichtung des Leitvektors liegt. Außerdem wird im Schritt S6 die Differenz aus dem Mittelwert der Fahrzeugrichtung FRM und der Sollrichtung SR gebildet und im Speicher SQ für den betreffenden Quadranten unter Mittelwertbildung gespeichert. Der betreffende Quadrantenspeicher enthält also dann immer den Mittelwert $\overline{M}$ (Q). Gleichzeitig wird im Zählerspeicher Z (Q) für den betreffenden Quadranten der Speicherinhalt um 1 erhöht. Ist in allen Speichern Z (Q) eine vorgegebene Schwelle für eine bestimmte Anzahl von Meßwerten erreicht (Schritt S8), dann wird der Gesamt-Mittelwert $\overline{M}$ aus den Inhalten der Speicher SQ1 bis SQ4 gebildet; gleichzeitig wird die Streuung ermittelt. Entsprechend diesen ermittelten Werten wird der Drehfehler festgestellt, und zwar im vorliegenden Beispiel nach der Beziehung

$$DF = \overline{M} \times \frac{10}{10 + \sigma^2}$$

Dieser festgestellte Drehfehler wird dann zur Korrektur der Richtungsmessung für die Koppelnavigation verwendet.

**Patentansprüche**

1. Verfahren zur Ermittlung eines Winkelfehlers bei einem in einem Fahrzeug eingebauten Magnetfeldsensor, wobei das Fahrzeug Teil eines Navigationssystems ist, in welchem geografische Ortsdaten im Fahrzeug zur Verfügung stehen, mit folgenden Merkmalen:
  – im Fahrzeug (1) wird mit dem Magnetfeldsensor (2) in vorgegebenen Abständen der Winkel der Sonden-Längsachse als Istwinkel gegenüber dem Erdmagnetfeld ermittelt;
  – nach Zurücklegung einer Strecke mit bekannten Ortsdaten wird der Differenzwert zwischen dem für diese Strecke gemessenen Istwinkel und dem aus den bekannten Ortsdaten ermittelten Sollwinkel gebildet und in einem Sektorspeicher (SQ1 bis SQ4) abgelegt, wobei der gesamte Winkelbereich von 360° in mehrere Sektoren (Q1 bis Q4) mit jeweils einem zugeordneten Sektorspeicher (SQ1 bis SQ4) eingeteilt ist und wobei die Differenzwerte jeweils in dem dem betreffenden Sollwinkel zugehörigen Sektorspeicher abgelegt werden;
  – nach Speicherung einer vorgegebenen Mindestanzahl von Differenzwerten in allen Sektorspeichern werden die Mittelwerte ($\overline{M1}$ bis $\overline{M4}$) der Speicherinhalte miteinander verglichen, und bei signifikanter Übereinstimmung der Mittelwerte wird aus ihnen ein Wert für die Abweichung der Richtung der Sonden-Längsachse von der Richtung der Fahrzang-Längsachse, der sogenannte Drehfehler (DF), abgeleitet.

2. Verfahren nach Anspruch 1, **dadurch gekennzeichnet,** daß der Winkelbereich in vier Quadranten (Q1 bis Q4) eingeteilt und jedem Quadranten ein Sektorspeicher (SQ1 bis SQ4) zugeordnet ist.

3. Verfahren nach Anspruch 1 oder 2, **dadurch gekennzeichnet,** daß aus den Mittelwerten ($\overline{M1}$ bis $\overline{M4}$) aller Sektorspeicher ein Gesamt-Mittelwert ($\overline{M}$) gebildet und die Streuung ($\sigma$) der Sektormittelwerte gegenüber dem Gesamt-Mittelwert berechnet wird und daß der Gesamt-Mittelwert ($\overline{M}$) für die Bestimmung des Drehfehlers (DF) um so stärker gewichtet wird, je geringer die Streuung ist.

4. Verfahren nach Anspruch 3, **dadurch gekennzeichnet,** daß der Drehfehler (D) aus dem Gesamt-Mittelwert ($\overline{M}$) und der Streuung ($\sigma$) nach der Beziehung

$$DF = \overline{M} \times \frac{a}{a + \sigma^b}$$

abgeleitet wird, wobei a und b wählbare Konstanten sind.

5. Verfahren nach Anspruch 4, **dadurch gekennzeichnet,** daß der Drehfehler aus dem Gesamt-Mittelwert und der Streuung nach der Beziehung

$$DF = \overline{M} \times \frac{10}{10 \cdot \sigma^2}$$

abgeleitet wird.

## Claims

1. Procedure for the determination of an angular error of a magnetic field sensor installed in a vehicle, the vehicle being part of a navigational system in which geographical location data are available in the vehicle, having the following features:
   – the magnetic field sensor (2) is used in the vehicle (1) to determine the angle of the longitudinal axis of the probe at prescribed distances as the actual angle with respect to the terrestrial magnetic field;
   – after covering a route with known location data, the differential value between the actual angle measured for this route and the desired angle determined from the known location data is formed and filed in a sector memory (SQ1 to SQ4), the total angular range of 360° being divided into a plurality of sectors (Q1 to Q4) each having an assigned sector memory (SQ1 to SQ4), and the differential values being filed in each case in the sector memory associated with the relevant desired angle;
   – after storage of a prescribed minimum number of differential values in all sector memories, the mean values ($\overline{M1}$ to $\overline{M4}$) of the memory contents are compared with one another, and given significant agreement between the mean values, they are used to derive a value for the deviation in the direction of the longitudinal axis of the probe from the direction of the longitudinal axis of the vehicle, the so-called turning error (DF).

2. Procedure according to Claim 1, **characterised** in that the angular range is divided into four quadrants (Q1 to Q4) and each quadrant is assigned a sector memory (SQ1 to SQ4).

3. Procedure according to Claim 1 or 2, **characterised** in that an overall mean value ($\overline{M}$) is formed from the mean values ($\overline{M1}$ to $\overline{M4}$) of all the sector memories and the dispersion (6) of the sector mean values is calculated with respect to the overall mean value, and in that the overall mean value ($\overline{M}$) is the more strongly weighted to determine the turning error (DF) the smaller the dispersion.

4. Procedure according to Claim 3, **characterised** in that the turning error (DF) is derived from the overall mean value ($\overline{M}$) and the dispersion (6) according to the relationship

$$DF = \overline{M} \times \frac{a}{a + \sigma^b}$$

where a and b are selectable constants.

5. Procedure according to Claim 4, **characterised** in that the turning error is derived from the overall mean value and the dispersion according to the relationship

$$DF = \overline{M} \times \frac{10}{10 \cdot \sigma^2}$$

## Revendications

1. Procédé pour déterminer une erreur angulaire dans un capteur de champ magnétique monté dans un véhicule, le véhicule faisant partie d'un système de navigation dans lequel des données géographiques de lieu sont disponibles dans le véhicule, présentant les caractéristiques suivantes :
   – à des intervalles prédéterminés, on détermine, dans le véhicule (1), l'angle de l'axe longitudinal du capteur sonde en tant qu'angle instantané par rapport au champ magnétique terrestre au moyen du capteur (2) ;
   – après avoir parcouru une distance avec des données de lieu connues, on forme la valeur de la différence entre l'angle instantané mesuré pour cette section et l'angle de consigne déterminé à partir des données de lieu connues et on la mémorise dans une mémoire de secteur (SQ1 à SQ4), la plage angulaire complète de 360° étant subdivisée en plusieurs secteurs (Q1 à Q4), à chacun desquels est associée une mémoire de secteur (SQ1 à SQ4), les valeurs de la différence étant mémorisées respectivement dans la mémoire de secteur associée à l'angle de consigne considéré ;
   – après mémorisation d'un nombre minimum prédéterminé de valeurs de différences dans toutes les mémoires de secteurs, les valeurs moyennes ($\overline{M1}$ à $\overline{M4}$) des contenus des mémoires sont comparées entre elles et, dans le cas d'une coïncidence significative des valeurs moyennes, une valeur de l'écart entre la direction de l'axe longitudinal du capteur et la direction de l'axe longitudinal du véhicule, ce qu'on appelle l'erreur en rotation (DF), est obtenue à partir desdites valeurs moyennes.

2. Procédé suivant la revendication 1, **caractérisé** par le fait que la plage angulaire est subdivisée en quadrants (Q1 à Q4) et qu'une mémoire de secteur (SQ1 à SQ4) est associée à chaque quadrant.

3. Procédé suivant la revendication 1 ou 2, **caractérisé** par le fait qu'une valeur moyenne globale ($\overline{\text{M}}$) est formée à partir des valeurs moyennes ($\overline{\text{M1}}$ à $\overline{\text{M4}}$) de toutes les mémoires de secteurs et que la dispersion ($\sigma$) des valeurs moyennes de secteurs par rapport à la valeur moyenne globale est calculée et que la valeur moyenne globale ($\overline{\text{M}}$) pour la détermination de l'écart de rotation (DF) est pondérée d'autant plus fortement que la dispersion est faible.

4. Procédé suivant la revendication 3, **caractérisé** par le fait que l'écart en rotation (D) est tiré de la valeur moyenne globale ($\overline{\text{M}}$) et de la dispersion ($\sigma$), conformément à la relation

$$DF = \overline{M} \times \frac{a}{a + \sigma^b}$$

a et b étant des constantes que l'on peut choisir.

5. Procédé suivant la revendication 4, **caractérisé** par le fait que l'écart en rotation est tiré de la valeur moyenne globale et de la dispersion conformément à la relation

$$DF = \overline{M} \times \frac{10}{10 \cdot \sigma^2}$$

FIG 1

FIG 3

Diff.winkel

FIG 2

## FIG 4

S1 — neuer Zyklus

S2 — wird Fzg. geleitet ? —n→

S3 — Fzg - Richtung mitteln → FRM

S4 — Ende des LV ? —n→

S5 — Quadrant Q ermitteln, in dem Sollrichtung liegt

S6 — Differenz aus FRM u. Sollrichtung SR in Speicher SQ (Q) einmitteln → $\overline{M}$(Q)

S7 — SPEICHER Z (Q) = SPEICHER Z (Q)+1

S8 — SPEICHER Z (Q) > SCHWELLE für Q = 1...4 ? —n→

S9 — $\overline{M} := \dfrac{1}{4} \displaystyle\sum_{i=1}^{4}$ SPEICHER SQ (i)

$\sigma^2 := \dfrac{1}{4} \displaystyle\sum_{i=1}^{4} (\overline{M}-\text{SPEICHER SQ (i)})^2$

S10 — DREHFEHLER $= \overline{M} * \left(\dfrac{10}{10+\sigma^2}\right)$